# EUROPEAN PATENT SPECIFICATION

(11) **EP 3 379 840 B1**
(45) Date of publication and mention of the grant of the patent: **03.09.2025**
(21) Application number: 18172256.2
(22) Date of filing: 09.07.2013
(51) Int. Cl.: G07C 5/00, G07C 5/08, E02F 9/26, G08C 17/02

(54) **SHOVEL MANAGEMENT SYSTEM**
BAGGERSTEUERUNGSSYSTEM
SYSTÈME DE GESTION POUR EXCAVATEUR

(30) Priority: 19.07.2012 JP 2012160910
(43) Date of publication of application: 26.09.2018
(62) Divisional of application: 13820332.8
(73) Proprietor: Sumitomo (S.H.I.) Construction Machinery Co., Ltd., Shinagawa-ku Tokyo 141-6025 (JP)
(72) Inventor: TSUKAMOTO, Hiroyuki, Chiba, 263-0001 (JP)
(74) Representative: Emde, Eric

(56) References cited:
- US-A1- 2005 273 230
- US-A1- 2010 214 094
- US-B1- 6 349 252

## Description

### TECHNICAL FIELD

The present invention relates to a shovel management system.

### BACKGROUND ART

There is suggested a method to determine an occurrence of a malfunction of a construction machine based on a detection value of a sensor mounted on the construction machine (for example, refer to JP 2002-332664 A). Malfunction information is sent to a management center, and a malfunction diagnosis procedure is extracted in the management center based on a sensor that detected an abnormal value. The driver of the construction machine carries out a malfunction diagnosis according to the malfunction diagnosis procedure.

US 2005/273230 A1 discloses a method for providing image data for visualizing a defective component and/or a repair cycle and/or a maintenance cycle of a road-bound motor vehicle, especially a passenger car or a motorbike. In order to reduce translation costs occurring for conventional repair instructions, the following steps are provided: digitalized data from at least two components of the vehicle is provided, especially CAD or vector data or another visual data format, digitalized data from the arrangement of the two components of the vehicle relative to each other is also provided. A first selection element for selecting a first repair cycle from a plurality of repair cycles, data or image data of the first step of the first repair cycle is provided, in addition to subsequent data or image data of the second step of the first repair cycle.

US 6 349 252 B1 discloses that a plurality of on-board controllers are provided within a construction machine. The plurality of on-board controllers are connected with freedom to communicate with each other by means of a serial communications line allowing communications in accordance with a predetermined communications protocol. Also, an information management controller which manages information about the inside of the construction machine is provided. Further, a monitoring station which manages information relating to at least one construction machine including the construction machine is provided on the outside of the construction machine. Also, the serial communications line inside the construction machine and the monitoring station are connected with freedom to communicate with each other via the information management controller. Data acquired by the plurality of on-board controllers is gathered, processed and stored by the information management controller, and the stored data is sent to the monitoring station.

US 2010/214094 A1 discloses a wireless sensor system for detecting electrical power lines in proximity to equipment, wherein the wireless sensor system includes a base station mounted in proximity to an operator of the equipment and a wireless sensor. The wireless sensor detects the presence of power lines by sensing an electrical field generated by the power lines and includes an accelerometer which senses motion of the equipment. The wireless sensor communicates data to the base station. The base station presents at least one alarm to the operator when the wireless sensor detects an electrical field with a magnitude which exceeds a selectable threshold and silences the least one alarm if no motion above a predetermined threshold is sensed for a predetermined period of time.

### DISCLOSURE OF THE INVENTION

### PROBLEM TO BE SOLVED BY THE INVENTION

There may be a case where, even if the malfunction diagnosis procedure is provided, a cause of a malfunction cannot be identified only by the diagnosis according to the detection value of the sensor and the malfunction diagnosis procedure. Because a construction machine such as a shovel performs work by driving an attachment such as a boom or the like by a hydraulic pressure generated by an engine power while hydraulically or electrically driving an upper turning body, on which the attachment and a cabin are mounted, to turn, it is necessary to provide many sensors in the construction machine to grasp an operating condition of the shovel. Additionally, the detection values of these sensors may fluctuate largely with passage of time during a time period where work is performed by the shovel. Thus, even if it is determined that a malfunction or abnormality occurs from a detection value of a sensor at a certain time point, it is difficult to determine or assume a cause which leads to the malfunction or abnormality.

The present invention was made in view of the above-mentioned problem, and it is an object of the present invention to provide a shovel management system that can allow a driver or maintenance worker to easily determine a cause of an abnormality.

### MEANS FOR SOLVING THE PROBLEM

A shovel management system according to the present invention is provided as set forth in claim 1. Preferred embodiments of the present invention may be gathered from the dependent claims.

### EFFECTS OF THE INVENTION

According to the present invention, the shovel management system comprises a portable information terminal adapted to receive, through a communication network, the transmitted abnormality information from the center management apparatus and display the received abnormality information, wherein the portable information terminal includes diagnosis application software, wherein the portable information terminal is further adapted to activate the diagnosis application software and to perform a diagnosis flow process for a specific abnormality content each time a diagnosis flow button is tapped, wherein the diagnosis flow process includes that the portable information terminal refers to a reference table in which, for each abnormality content, check items being components of the shovel are stored in a predetermined order and displays information regarding the check items corresponding to the specific abnormality content in the stored order, wherein the portable information terminal is adapted to display, after activation of the diagnosis application software, a plurality of diagnosis flow screens iteratively, each diagnosis flow screen simultaneously displaying an abnormality contents displaying part, a check item number displaying part, a check item position displaying part, a first message displaying part, a second message displaying part, and a screen switching button, the plurality of screens being switched in the predetermined order of the check items, when the screen switching button is tapped, wherein the first message displaying part is an area for displaying a measure to be taken by a maintenance worker with respect to the check item being displayed in the check item position displaying part, and wherein the portable information terminal is adapted to display, in the check item position displaying part, the position of the component of the shovel, which is one of the check items, after activation of the diagnosis application software, thereby reducing a time spent on the abnormality diagnosis.

### BRIEF DESCRIPTION OF THE DRAWINGS

FIG. 1 is a side view of a shovel;
FIG. 2 is a block diagram illustrating a configuration of a drive system of the shovel illustrated in FIG. 1;
FIG. 3 is a side view of an interior of a cabin provided with an attaching part for a multifunctional portable information terminal;
FIG. 4 is a plan view of the cabin provided with the attaching part for a multifunctional portable information terminal;
FIG. 5 is a block diagram illustrating a connection of a controller of the shovel and a multifunctional portable information terminal;
FIG. 6 is an illustration of a display part of the multifunctional portable terminal on which abnormality information is displayed;
FIG. 7 is an illustration of a display screen illustrated in FIG. 6 on which detection values at an arbitrary time are displayed;
FIG. 8 is a flowchart of a diagnosis flow process;
FIG. 9 is an illustration of an example of diagnosis flow screen;
FIG. 10 is an illustration of another example of the diagnosis flow screen;
FIG. 11 is an illustration of a further example of the diagnosis flow screen;
FIG. 12 is an illustration of a display part of the multifunctional portable terminal on which abnormality information is displayed;
FIG. 13 is an illustration of the display part of the multifunctional portable terminal on which abnormality information is displayed;
FIG. 14 is an illustration of the display part of the multifunctional portable terminal on which abnormality information is displayed;
FIG. 15 is a flowchart of a shovel abnormal time process;
FIG. 16 is an illustration of an example of a communication link screen;
FIG. 17 is an illustration of another example of the communication link screen;
FIG. 18 is an illustration of a further example of the communication screen; and
FIG. 19 is a block diagram of a drive system of a hybrid shovel.

### MODE FOR CARRYING OUT THE INVENTION

Next, a description will be given, with reference to the drawings, of embodiments.

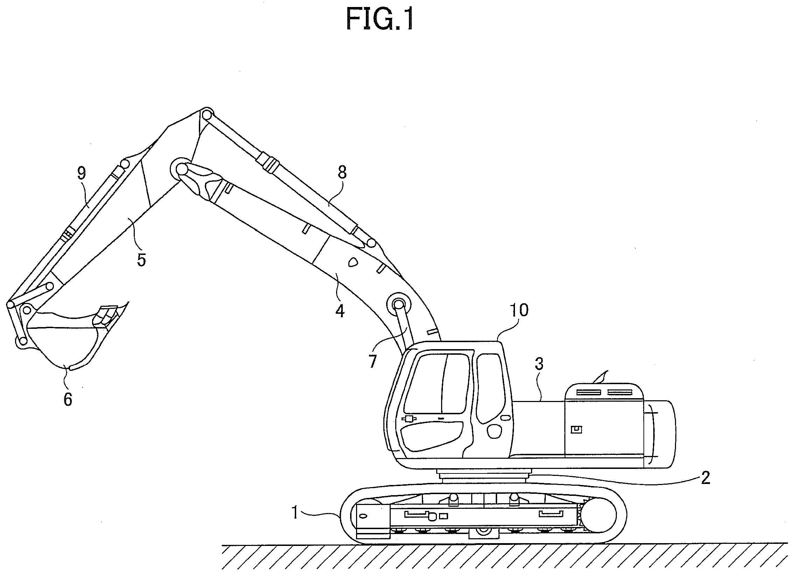

FIG. 1 is a side view of a shovel mounted with a management apparatus to which the present invention is applied. The shovel includes a lower running body 1 and an upper turning body 3 mounted on the lower running body 1 via a turning mechanism 2. A boom 4 is attached to the upper turning body 3. An arm 5 is attached to an end of the boom 4. A bucket 6 is attached to an end of the arm 5. The boom 4, arm 5 and bucket 6 are hydraulically driven by a boom cylinder 7, arm cylinder 8 and bucket cylinder 9, respectively. A cabin 10 is provided to the upper turning body 3. A power source such as an engine is also provided to the upper turning body 3. The cabin 10 is provided with a driver's seat so that a driver or operator operates the shovel while sitting on the driver's seat.

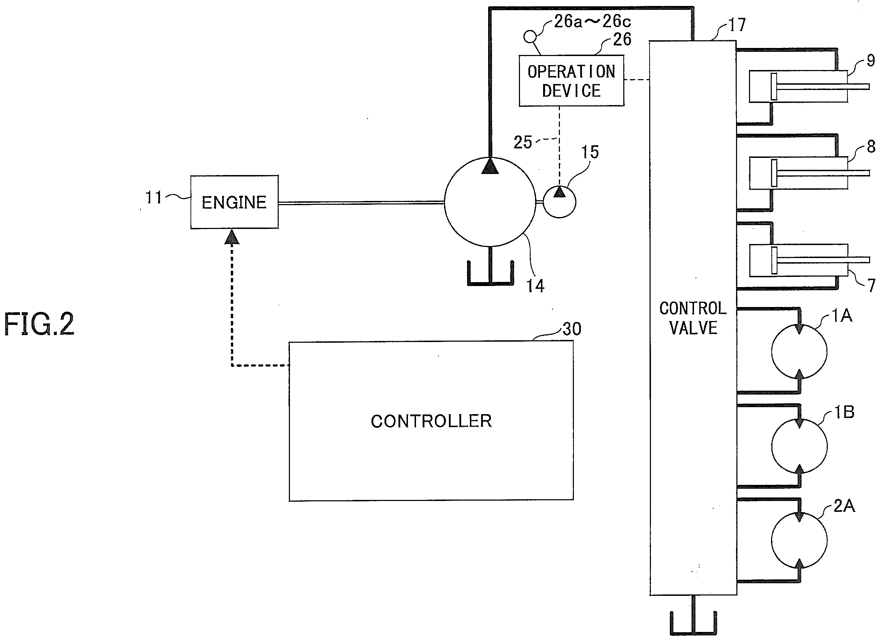

FIG. 2 is a block diagram illustrating a structure of a drive system of the shovel illustrated in FIG. 1. In FIG. 2, double lines denote a mechanical power system, bold solid lines denote high-pressure hydraulic lines, thin dashed lines denote pilot lines, and a bold dashed line arrow denotes an electric drive/control system.

The drive system of the shovel is mainly constituted by an engine 11, a main pump 14, a pilot pump 15, a control valve 17, an operation device 26 and a controller 30.

The engine 11 is a drive power source of the shovel, and is operated to maintain a predetermined number of revolutions. An output axis of the engine 11 is connected to an input axis of each of the main pump 14 and the pilot pump 15.

The main pump 14 is, for example, a swash plate type variable capacity hydraulic pump, which supplies an operating oil to the control valve 17 through a high pressure hydraulic line 16. The pilot pump 15 is, for example, a fixed capacity hydraulic pump, which supplies an operating oil to various hydraulic control devices through a pilot line 25.

The control valve 17 is a hydraulic control valve for controlling the hydraulic system in the hydraulic shovel. The control valve 17 selectively supplies the operating oil supplied from the main pump 14 to one or a plurality of the boom cylinder 7, arm cylinder 8, bucket cylinder 9, running hydraulic motor 1A (right), running hydraulic motor 1B (left) and turning hydraulic motor 2A. Note that, in the following description, the boom cylinder 7, arm cylinder 8, bucket cylinder 9, running hydraulic motor 1A (right), running hydraulic motor 1B (left) and turning hydraulic motor 2A are collectively referred to as the "hydraulic actuators".

The operation device 26 is used by an operator to operate the hydraulic actuators by supplying the operating oil supplied from the pilot pump 15 to pilot ports of the flow control valve corresponding to the respective hydraulic actuators through a pilot line 25. The pressure of the operating oil supplied to each of the pilot ports is set to a pressure responding to an operating direction and operating amount of a lever or pedal 26A-26C corresponding to a respective one of the hydraulic actuators.

The controller 30 is a control device for controlling an operating speed of each of the hydraulic actuators, which is constituted by a computer equipped with, for example, a CPU (Central Processing Unit), a RAM (Random Access Memory), a ROM (Read Only Memory), etc. The CPU of the controller 30 executes processes corresponding to programs corresponding to the operation and function of the shovel while reading the programs from the ROM and developing it on the RAM.

In the shovel having the above-mentioned structure, a management apparatus for managing an operating state of the shovel is provided. The management apparatus temporarily stores detection values from a plurality of sensors as detection information so as to send the detection information to a display device to cause the display device to display the detection information.

The display device is an input and display device constituted by, for example, a touch panel, and is arranged in the vicinity of the driver's seat and at a position where the drive can easily look. In the present embodiment, a portable information device (generally, referred to as the "portable terminal") is used as the input and display device. More specifically, a so-called smartphone, tablet terminal, etc., which is a multifunctional portable information terminal (or multifunctional portable terminal) as a portable terminal is arranged in the vicinity of the driver's seat to use as an input and display device. The management apparatus can provide information to the driver by causing the display part of the multifunctional portable information terminal to display an operating condition of the shovel and control information. Additionally, the driver can input information and instructions to the control device and management apparatus of the shovel by using an inputting function of the multifunctional portable information terminal.

In recent years, the multifunctional portable information terminal has been spread widely, and most of drivers of shovels have a multifunctional portable information terminal. Thus, by providing an attaching part such as a holder to attach a multifunctional portable information terminal at a predetermined position in the vicinity of the driver's seat, the driver of the shovel can use one's own multifunctional portable information terminal by attaching the one's own multifunctional portable information terminal to the attaching part when starting an operation of the shovel. The portable device used as an input and display apparatus of the shovel as mentioned above is not limited to one's own multifunctional portable information terminal, and may be a portable device which is previously prepared to be used for a shovel by the employer.

The attaching part for the multifunctional portable information terminal is provided with a connector for connecting the multifunctional portable information terminal to the control part of the shovel to perform data communication so that the data communication can be performed between the multifunctional portable information terminal and the control part of the shovel in a state where the multifunctional portable information terminal is attached to the attaching part. Many multifunctional portable information terminals of recent years are provided with a micro USB connector socket for connecting with an external device. Thus, by providing a micro USB connector socket in the attaching part for the multifunctional portable information terminal, the multifunctional portable information terminal can be connected to the control part of the shovel.

There are many cases where a multifunctional portable information terminal of recent years is provided with a short-distance wireless communication device using Bluetooth (Registered Trademark) or a short-distance wireless communication device using an infrared communication. Thus, the data communication between the multifunctional portable information terminal and the control part of the shovel may be performed using such a short-distance wireless communication.

Here, if the display device of the multifunctional portable information terminal is continuously used, the battery runs out for, for example, 2 to 3 hours of use. If the time of work by the shovel is longer than the battery run-out time, the multifunctional portable information terminal becomes unusable in the middle of the work. Thus, according to the present embodiment, an electric power can be supplied from the power supply part of the shovel to the multifunctional portable information terminal in a state where the multifunctional portable information terminal is attached to the attaching part.

Specifically, if, for example, the data communication is performed using the micro USB connector as mentioned above, a power supply can be performed through the micro USB connector. If the multifunctional portable information terminal has a connector exclusive for power supply, a connector connectable to such a connector may be provided to the attaching part.

By providing the attaching part for the multifunctional portable information terminal in the vicinity of the driver's seat in the cabin 10 of the shovel, the multifunctional portable information terminal can be used as a display device of the shovel by merely attaching the multifunctional portable information terminal to the attaching part.

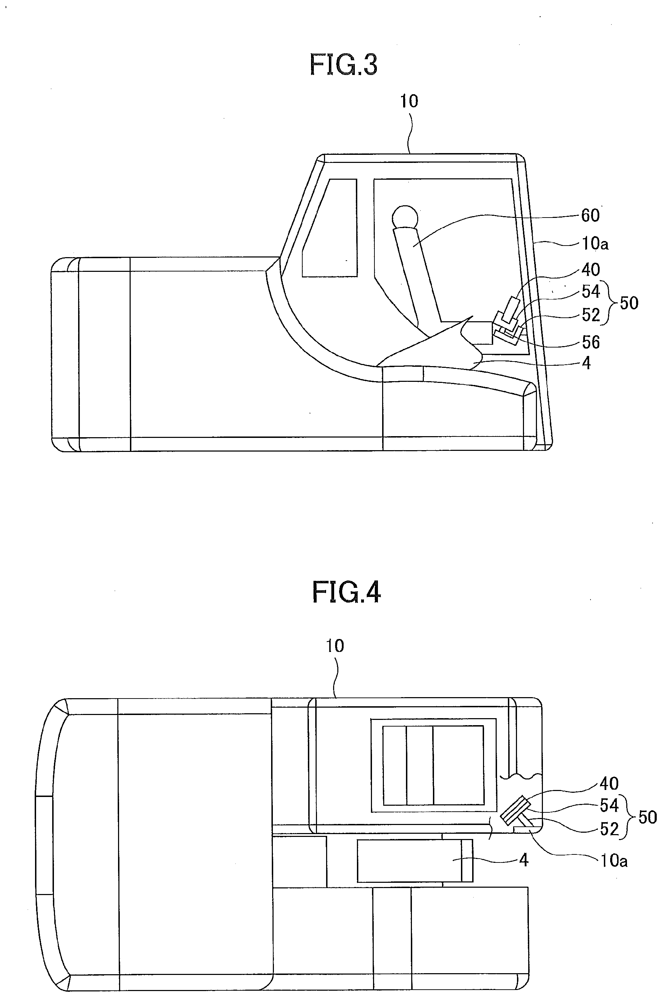

FIG. 3 is a side view of the cabin illustrating the interior of the cabin provided with the attaching part for the multifunctional portable information terminal. FIG. 4 is a plan view of the cabin provided with the attaching part for the multifunctional portable information terminal.

The attaching part 50 for attaching the multifunctional portable information terminal 40 includes an installation table 52 and a mounting part 54 supported by the installation table 52. The installation table 52 is attached and fixed to a frame 10a of the cabin 10 provided with the driver's seat 60. The mounting part 54 is supported by the installation table 52 via a vibration suppressing mechanism 56 including an elastic material such as a spring or soft rubber so that a vibration or shock in the cabin 10 is not directly transmitted to the mounting part 52 via the vibration suppressing mechanism 56. That is, the mounting part is supported by the installation table 52 via the vibration suppressing mechanism 56 so that a vibration or shock transmitted to the multifunctional portable information terminal fixed to the mounting part 54 is suppressed.

Generally, the boom 4 is located on the right side of the driver sitting on the driver's seat 60, and, in many cases, the driver operates the shovel while visually recognizing the bucket 6 and the arm 5 attached to the end of the boom 4. Although the frame 10a on the front right side of the cabin 10 is a part that blocks the view of the driver, the attaching part 50 for the multifunctional portable information terminal 40 is provided using this part in this example. Thus, because the multifunction portable information terminal 40 is located in an area that already obstructs view, the multifunction portable information terminal 40 itself cannot block the driver's view. Depending on the width of the frame 10a, the multifunctional portable information terminal 40 is preferably placed vertically on and fixed to the mounting part 54 so that the entire multifunctional portable information terminal 40 falls within the width of the frame 10a.

Note that while the portable terminal (multifunctional portable information terminal 40) is used as a display device in the present example, a display device such as an LCD touch panel may be previously installed the shovel.

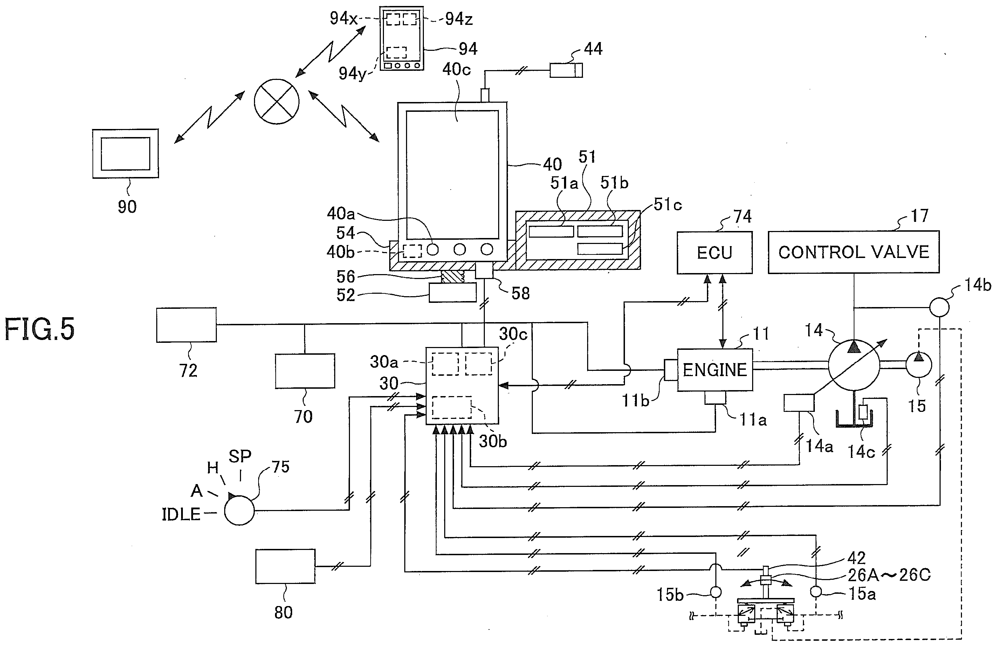

FIG. 5 is a block diagram illustrating the connection between the controller 30 (control device) of the shovel and the multifunctional portable information terminal 40. As illustrated in FIG. 5, the attaching part 50 includes a switch panel 51. The switch panel 51 is a panel including various hardware switches, and is attached to the mounting part 54. The switch panel 51 includes a light switch 51a, wiper switch 51b and window washer switch 51c that are hardware buttons. The light switch 51a is a switch for turning on/off a light attached to the exterior of the cabin 10. The wiper switch is a switch for operating/stopping a wiper. The window washer switch 51c is a switch for injecting a window washer liquid.

When the multifunction portable information terminal 40 is attached to the mounting part 54 of the attaching part 50, the multifunction portable information terminal 40 is connected to the controller 30 of the shovel via the connecting part 58. More specifically, a plug of a micro USB connector provided in the mounting part 54 is inserted into and connected to a receptacle (socket) of a micro USB connector of the multifunction portable information terminal 40, and, thereby, data communication can be performed between the multifunction portable information terminal 40 and the controller 30. The micro USB connector constitutes the connecting part 58.

The micro USB connector is a connector that enables an electric power supply as well as the connection for data communication. The controller 30 is driven by electric power supplied from a storage battery 70 (for example, 24 V battery) mounted to the shovel. Because the controller 30 is capable of causing an electric power to be supplied from the rechargeable battery 70 to the multifunction portable information terminal 40 via the connecting part 58, the multifunction portable information terminal 40 can be operated with the electric power supplied from the storage battery 70 of the shovel without consuming its own battery power. Moreover, the form of the connecting part 58 is not limited to a contact type such as the micro USB connector in which wires are caused to contact with each other, and may be of a non-contact type.

The storage battery 70 is charged by electric power generated by an alternator 11a (generator) of the engine 11. The electric power of the storage battery is supplied also to an electric component 72 of the shovel other than the controller 30. Moreover, a starter 11b of the engine 11 is driven by the electric power from the storage battery to start the engine 11.

The engine 11 is controlled by an engine control unit (ECU) 74. Various kinds of data indicating a state of the engine 11 (for example, data indicating a cooling water temperature (physical amount) and an engine injection pressure (physical amount)) is always transmitted from the ECU 74 to the controller 30. Accordingly, the controller 30 can store the data in a temporary storing part (memory) 30a to send the data to the multifunction portable information terminal 40 when it is needed.

The controller 30 is supplied with various kinds of data as mentioned below, and the data is stored in the temporary storing part 30a.

First, data indicating a swash plate angle is supplied to the controller 30 from a regulator 14a of the main pump 14, which is a variable capacity hydraulic pump. Additionally, data indicating a discharge pressure of the main pump 14 is sent to the controller 30 from a discharge pressure sensor 14b. These sets of data (data indicating physical amounts) are stored in the temporary storing part 30a. An oil temperature sensor 14c is provided to a tank in which the operating oil to be taken in by the main pump 14 is stored, and data indicating a temperature of the operating oil in the tank is supplied to the controller 30 from the oil temperature sensor 14c.

Moreover, a pilot pressure sent to the control valve 17 when operating the operation levers and pedal 26A to 26C is detected by hydraulic pressure sensors 15a and 15b, and data indicating the detected pilot pressure is sent to the controller 30. The data (data indicating an operation input amount) is stored in the temporary storing part 30a as detection information.

Moreover, as illustrated in FIG. 5, the shovel is equipped with an engine revolution number adjusting dial 75 in the cabin 10. The engine revolution number adjusting dial 75 is a dial for adjusting a number of revolutions of an engine, and capable of changing the number of revolutions of the engine in four steps. Additionally, data indicating a setting state of the number of revolutions of the engine is always sent to the controller 30. The engine revolution number adjusting dial 75 can switch the number of revolutions of the engine between four steps, that is, an SP mode, an H mode, an A mode and an idling mode. Note that FIG. 5 illustrates a state where the H mode is selected by the engine revolution number adjusting dial 75.

The SP mode is a work mode that is selected when it is desirous to give a priority to an amount of work. A highest number of revolutions of the engine is used in the SP mode. The H mode is a work mode that is selected when it is desirous to achieve both a large amount of work and a low fuel consumption. A second highest number of revolutions of the engine is used in the H mode. The A mode is a work mode that is selected when it is desirous to operate the shovel with a low noise while a priority is given to a fuel consumption. A third highest number of revolutions of the engine is used in the A mode. The idling mode is a work mode that is selected when it is desirous to set the engine in an idling state. A lowest number of revolutions of the engine is used in the idling mode. The engine 11 is subjected to a revolution number control to maintain one of the numbers of revolutions of the engine, which is set by the adjusting dial 75.

Additionally, a switch 42, which is operated when a driver desires to use a voice input function of the multifunctional portable information terminal 40, is provided to the operation lever 26A. When the driver operates the switch 42, a signal is sent to the controller 30. The controller 30 sends a control signal to the multifunctional portable information terminal 40 based on the signal so as to turn on the voice input function of the multifunctional portable information terminal 40.

Thus, the driver can easily operate the switch 42 without releasing the operation lever so that the drive can input a command to the control device of the shovel using the voice input function of the multifunctional portable information terminal 40.

As a microphone for voice inputting, a microphone 40a incorporated in the multifunctional portable information terminal 40 can be used. That is, the driver can input a voice signal from the microphone 40a to a voice recognition part 40b of the multifunctional portable information terminal 40 by uttering a voice indicating a desired command toward the multifunctional portable information terminal 40 after operating the switch 42 provided to the operation lever. The voice recognition part 40b of the multifunctional portable information terminal 40 applies a voice recognition process to the voice signal input from the microphone 40a, and determines a command corresponding to the input voice signal. The command determined by the voice recognition part 40b is displayed on the display and input device 40c (for example, a touch panel) of the multifunctional portable information terminal 40, and is sent to the controller 30 of the shovel through the connecting part 58. As mentioned above, a command intended by the driver is input to the shovel through the voice recognition function of the multifunctional portable information terminal 40. Note that an external microphone 44 may be connected to the multifunctional portable information terminal 40, and the external microphone 44 may be arranged at a position where the driver can easily input a voice.

As mentioned above, the detection information from the management apparatus can be displayed by using the multifunctional portable information terminal 40 as a display device of the shovel.

In the shovel having the above-mentioned structure, the control part 30b of the controller 30 determines whether an abnormality occurs in the shovel based on the detection information including the above-mentioned various kinds of data. Then, if the control part 30b of the controller 30 determines that an abnormality occurs, the control part 30b causes the abnormality information storing part 30c to transfer the detection information, which is accumulated in the temporary storing part 30a from time t1 to time t2, the time t1 being a predetermined time period before the time at which the determination of the occurrence of the abnormality was made, the time t2 being the time at which the determination of the occurrence of the abnormality was made.

In the above-mentioned structure, the management apparatus is constituted by the temporary storing part 30a, abnormality information storing part 30c and control part 30b of the controller 30. The temporary storing part 30a is a memory of the controller 30, and the abnormality information storing part 30c is also a memory inside the controller 30. A single memory may be used by dividing it for the temporary storing part 30a and the abnormality information storing part 30c. The control part 30b is materialized by an operation device such as the CPU or the like executing a program.

After the abnormality information stored in the temporary storing part 30a is stored in the abnormality information storing part 30c, the abnormality information stored in the abnormality information storing part 30c is sent to the multifunctional portable information terminal 40 as a display device according to an instruction from the control part 30b. Then, the abnormality information is displayed on the display part 40c of the multifunctional portable information terminal 40 in a previously determined pattern.

Additionally, by sending an instruction to the management apparatus, the abnormality information can be sent to and displayed on the multifunctional portable information terminal 40 (display device) at any time. For example, when a maintenance worker performs a malfunction diagnosis or repair of a shovel after an abnormality occurs in the shovel, the abnormality information can be displayed on the multifunctional portable information terminal 40 by the maintenance worker inputting an instruction to the management apparatus to display the abnormality information. The maintenance worker can check the abnormality information displayed on the multifunctional portable information terminal 40 as a display device. Then, as mentioned later, the maintenance worker can identify a cause of the abnormality by seeing the abnormality information displayed on the multifunctional portable information terminal 40 (display device).

The management apparatus of the shovel can cause a center management apparatus 90 installed in a remote service center to wirelessly transmit the abnormality information by using the data communication function of the multifunctional portable information terminal 40. By displaying the abnormality information on the center management apparatus 90, the maintenance worker at a remote place can determine or assume the cause of the abnormality. Accordingly, the maintenance worker can previously prepare necessary tools and parts by assuming the cause of the abnormality before going to repair the shovel. Thereby, there is no need for the maintenance worker to return to the service center to take a repair tool or place an order of parts after the maintenance worker actually visits the place where the shovel is installed, thereby reducing a time spent on the repair. In this case, the center management apparatus 90 serves as the management apparatus of the shovel.

According to the present invention, upon reception of the abnormality information, the service center may transfer the abnormality information to a multifunctional portable information terminal 94 belonging to the maintenance worker of the shovel from the center management apparatus 90 through a communication network. In this case, the multifunctional portable information terminal 94 functions as the management apparatus of the shovel or a part of the management apparatus of the shovel, and may be provided with a part or all of a temporary storing part 94x, control part 94y and abnormality information storing part 94z corresponding to the temporary storing part 30a, control part 30b and abnormality information storing part 30c of the controller 30, respectively. In this case, the control part 94y provided in the multifunctional portable information terminal 94 causes the detection information stored in the abnormality information storing part 94z to be displayed on a display part 94c.

Note that if the portable terminal (multifunctional portable information terminal 40) is not used as a communication device, a wireless transmission device may be provided to the shovel itself so that the control part 30b sends the abnormality information to the remote service center by using the wireless transmission device.

A description is given below of the abnormality information displayed on the display device of the multifunctional portable information terminal 40 or the like and a method of displaying the abnormality information.

The abnormality displayed on the display device is data stored in the temporary storing part 30a of the management apparatus within a predetermined time period (data representing a physical amount and data representing an operation input amount). The physical amount or the operation input amount is detected (sampled) for each fixed time period, and data representing the physical amount or operation input amount is stored in the temporary storing part 30a together with information regarding the time at which the physical amount or operation input amount is detected. For example, the temporary storing part 30a is configured by a memory having a predetermined storage capacity, and, after a fixed amount of data is stored in the temporary storing part 30a, data detected at the earliest time is deleted and, instead, data detected at the latest time is stored in the temporary storing part 30a. Thus, data detected during a time period from a time, which is earlier than the latest time at which the data is detected (or the present time) by a predetermined time period, to the latest time is always stored in the temporary storing part 30a. Accordingly, if all data stored in the temporary storing part 30a is transferred to and stored in the abnormality information storing part 30c at time t1, data within a time period from time t2, which is earlier than time t1 by a predetermined time period, to time t1 is stored in the abnormality information storing part 30c.

Here, the time interval (the predetermined time period) from time t2 to time t1 is a previously set time interval, and preferably be set to, for example, a time period from about 30 seconds to about 5 minutes.

The time interval from time t2 to time t1 depends on the storage capacity of the temporary storing part 30a. If the storage capacity of the temporary storing part 30a is sufficiently large, an arbitrary time is selected for time t2 by using the time information stored together with the data so as to retrieve the data from time t2 to time t1 from the temporary storing part 30a and store the retrieved data in the abnormality information storing part 30c.

Here, time t1 is the time at which the control part 30b determines that an abnormality occurs based on the physical amount input from each sensor and the operation input amount. By storing data input after time t1 at which the occurrence of the abnormality is determined, the data from time t2 to time t3, which is later than time t1, may be transferred to and stored in the abnormality information storing part 30c.

Here, the time interval from time t1 to time t3 is a previously set time interval, and is preferably set to about 10 seconds to about 1 minute.

As mentioned above, the data as the abnormality information stored in the abnormality information storing part 30c is sent to the multifunctional portable information terminal 40 or the display device, or sent to the center management apparatus 90 of the remote service center, and displayed in a predetermined pattern.

Next, a description is given of a method of displaying the abnormality information. Here, a description is given of a case where the abnormality information is sent to and displayed on the multifunctional portable information terminal 94. Note that the following description is applicable to a case where the abnormality information is sent to the multifunctional portable information terminal 40 in the same manner.

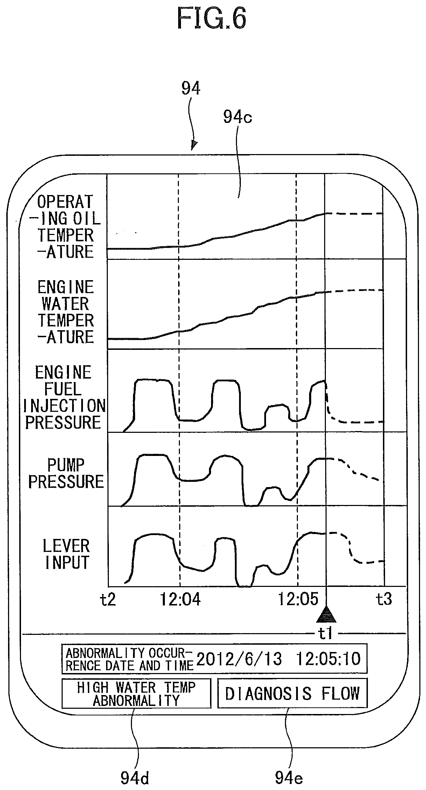

FIG. 6 is an illustration illustrating the display part 94c of the multifunctional portable information terminal 94 on which the abnormality information is displayed. In the example illustrated in FIG. 6, the abnormality information includes pieces of data regarding 1) a pilot pressure (lever input) as an operation input amount detected by the hydraulic sensors 15a and 15b, 2) a pump pressure which is a hydraulic pressure (physical amount) detected by the discharge pressure sensor 14b, 3) an engine fuel injection pressure (physical amount) sent from the ECU 74, 4) an engine water temperature (physical amount) sent from the ECU 74, and 5) an operating oil temperature (physical amount) detected by the oil temperature sensor 14c, these pieces of data being displayed in vertically arranged time charts having a horizontal axis representing time.

In the example illustrated in FIG. 6, the left end of the time chart corresponds to time t2. Time t1 at which a determination is made that an abnormality occurs corresponds to a vertical line provided with a black solid triangle at the lower end side thereof. Abnormality occurrence date and time is indicated as a date and time at which the determination was made that an abnormality occurs by values of year, month, day, hour, minute and second in a blank area on the lower side of the time chart. In the example illustrated in FIG. 6, the abnormality occurrence date and time is 2012/6/13 12:05:10, and a vertical line provided with a solid black rectangle at the lower end side thereof is drawn at a position corresponding to time t1 (12:5:10) in the time chart. Additionally, an abnormality contents display part 94d for displaying the contents of abnormality and a diagnosis flow button 94e are indicated on the lower side of the abnormality occurrence date and time. In the example illustrated in FIG. 6, the abnormality contents display part 94d displays the "high water temperature abnormality" that indicates that the temperature of the engine cooling water becomes higher than or equal to a predetermined value. The abnormality contents may be displayed by an error code. Additionally, the diagnosis flow button is a software button for displaying a diagnosis flow screen mentioned later.

In the display of the abnormality information illustrated in FIG. 6, each data from time t2 to time t1 is indicated by the time chart. 1) The lever input (pilot pressure) fluctuates in the time period from time t2 to time t1, and it can be appreciated that the driver is operating the operation lever. 2) The pump pressure changes in response to the change in the lever input (pilot pressure), and it can be appreciated that the pump pressure is in a normal condition. 3) The engine fuel injection pressure changes in response to the lever input (pilot pressure) (that is, in response to an amount of operation of the operation lever), and it can be appreciated that the engine fuel injection pressure is in a normal condition. 4) The engine water temperature starts to rise gradually at a time which is later than time t2, and it can be appreciated that the engine water temperature reaches an abnormally high temperature at time t1. From this, it is assumed that a large load is applied to the engine and the engine water temperature is raised. 5) The operating oil temperature starts to rise gradually at a time which is later than time t2, and it can be appreciated that the engine water temperature reaches an abnormally high temperature at time t1.

In the display example illustrated in FIG. 6, because the engine water temperature exceeds an upper limit value, the control part 30b determines that an abnormality occurs, and, it is assumed that the abnormality information is displayed. Then, it is assumed that the operating oil temperature, engine fuel injection pressure and pump pressure other than the rising in the engine water temperature change normally. That is, the abnormality information illustrated in FIG. 6 indicates that only the engine water temperature rises excessively although an appropriate load is applied to the engine 11 because the main pump 14 driven by the engine 11 is driven normally to generate a hydraulic pressure. It is considered that such a condition is established because the cooling capacity of the cooling water of the engine is reduced and the engine 11 is not sufficiently cooled. As a cause of establishing such a condition, it is considered that a radiator and oil cooler have become dirty or a dustproof net has become dirty. Accordingly, a driver or maintenance worker who sees the display of the abnormality information illustrated in FIG. 6 first think about dirt collection of the dustproof net and performs a filter check.

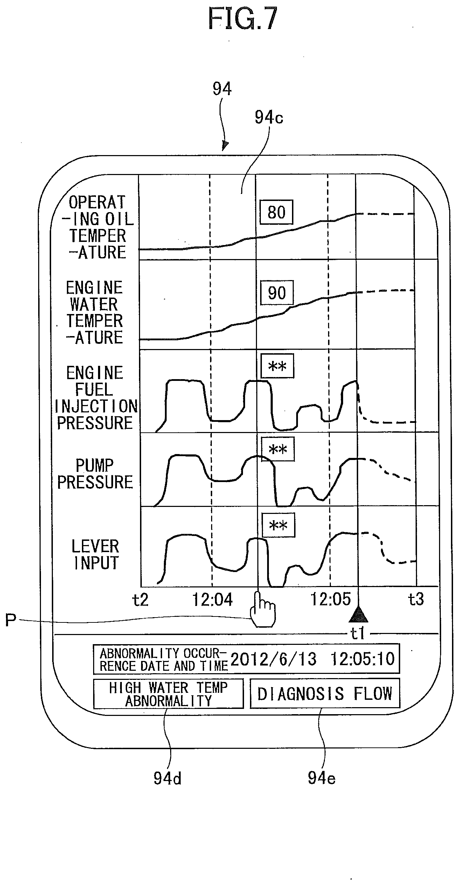

FIG. 7 is an illustration of an example of the display screen of the abnormality information illustrated in FIG. 6 in which values of the lever input (operation input amount), pump pressure (physical amount), engine fuel injection pressure (physical amount), engine water temperature (physical amount) and the operating oil temperature (physical amount) are displayed. In the display screen illustrated in FIG. 6, if an arbitrary time is designated by a pointer, a vertical line indicating the designated time appears in the time charts, and a value at that time is displayed in the vicinity of an intersection of the vertical line and the graph of each time chart. Because a pointer P appears under the vertical line, the vertical line can be moved to an arbitrary position by dragging the pointer P in a leftward or rightward direction. Thereby, the driver or maintenance worker of the shovel can immediately check the values of the lever input (operation input amount), pump pressure (physical amount), engine fuel injection pressure (physical amount), engine water temperature (physical amount) and the operating oil temperature (physical amount) at an arbitrary time within the period from time t2 to time t1.

Note that a dotted line after time t1 in each time chart is displayed when data after time t1 to time t3 is contained in the abnormality information, and the driver or maintenance worker can check changes in the values of the operation input amount and the physical amounts after time t1 by seeing the dotted lines.

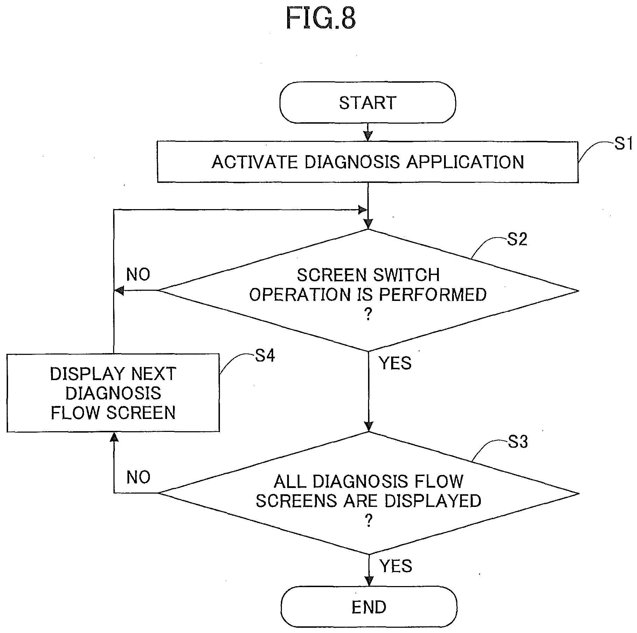

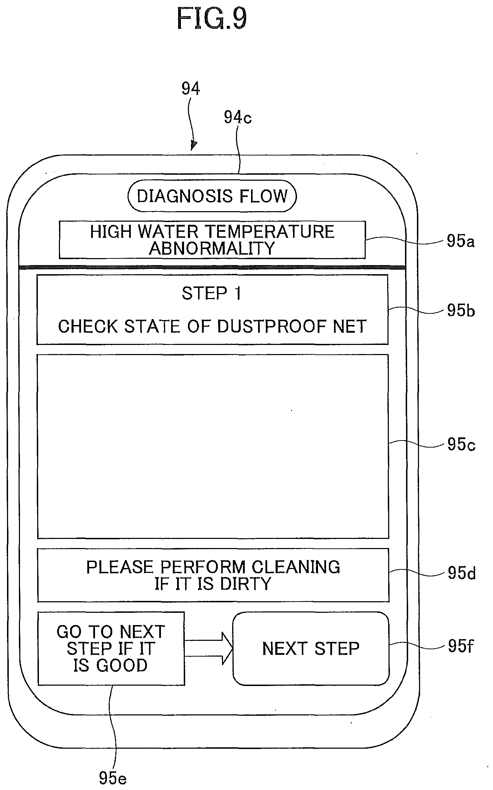

Next, a description will be given, with reference to FIGS. 8-11, of a process performed in a case where the diagnosis flow button 94e is tapped (hereinafter, referred to as the "diagnosis flow process"). FIG. 8 is a flowchart of the diagnosis flow process, and the multifunctional portable information terminal 94 performs the diagnosis flow process each time the diagnosis flow button 94 is tapped. FIGS. 9-11 are illustrations illustrating examples of a diagnosis flow screen.

First, the multifunctional portable information terminal 94 activates diagnosis application software (hereinafter, referred to as the "diagnosis application") (step S1). In the present embodiment, the multifunctional portable information terminal 94 refers to a reference table in which check items corresponding to contents of each abnormality are stored in a predetermined order and displays information regarding the check items in that order.

FIG. 9 is an illustration of the diagnosis flow screen that is displayed first if the "high water temperature abnormality" is detected as the abnormality contents. The diagnosis flow screen illustrated in FIG. 9 includes an abnormality contents displaying part 95a, check item number displaying part 95b, check item position displaying part 95c, first message displaying part 95d, second message displaying part 95e and screen switching button 95f.

The abnormality contents displaying part 95a is an area for displaying contents of an abnormality. In the example illustrated in FIG. 9, the abnormality contents displaying part 95a displays the "high water temperature abnormality" indicating that the temperature of the engine cooling water becomes higher than or equal to a predetermined value.

The check item number displaying part 95b is an area for displaying the number of the check item presently displayed. In the example illustrated in FIG. 9, the check number displaying part 95b displays "step 1" indicating that it is a first check item, and also displays that the contents of step 1 is "checking the state of the dustproof net".

The check item position displaying part 95c is an area for illustrating a position of a component which is one of the check items, and, for example, illustratively describes the position of the dustproof net mounted on the shovel (illustration is omitted in FIG. 9). Specifically, the check item position display part 95c displays an illustration indicating the dustproof net on an illustration indicating an entire image of the shovel in a color different from other parts of the shovel. In this case, the operator of the multifunctional portable information terminal 94 can scroll, reduce or enlarge the illustration displayed on the check item position displaying part 95c by a swiping operation, pinch-in operation, pinch-out operation, etc.

The first message displaying part 95d and second message displaying part 95e are areas for displaying information regarding the check item being displayed. In the example illustrated in FIG. 9, the first message displaying part 95d displays the message "removal of dirt (please perform cleaning if it is dirty)" as the measures to be taken by the maintenance worker with respect to the dustproof net. Additionally, the second message displaying part 95e displays the message "transit to a next check item (go to next step if it is good)" as measures to be taken by the maintenance worker after checking the state of the dustproof net.

The screen switching button 95f is a software button for switching the screen. In the example illustrated in FIG. 9, the screen switching button 95f displays "next step" as a caption indicating that the button is for displaying the diagnosis flow screen regarding a next check item. The operator of the multifunctional portable information terminal 94 switches the diagnosis flow screen by tapping the screen switching button 95f. Note that the operator of the multifunctional portable information terminal 94 may switch the diagnosis flow screen by other operations such as a swiping operation, etc.

The description of the flow of the diagnosis flow process is continued with reference to FIG. 8.

After the diagnosis flow screen is displayed by activating the diagnosis application, the multifunctional portable information terminal 94 continuously monitors existence/non-existence of a screen switching operation (step S2). In the present embodiment, the multifunctional portable information terminal 94 determines whether the screen switching button 95f is tapped or whether a swiping operation is performed to switch the screen.

If it is determined that the screen switching operation is not performed (NO in step S2), the multifunctional portable information terminal 94 waits for the screen switching operation.

On the other hand, if it is determined that the screen switching operation is performed (YES in step S2), the multifunctional portable information terminal 94 determines whether all of the diagnosis flow screens have been displayed (step S3).

If it is determined that all of the diagnosis flow screens have not been displayed yet (NO in step S3), the multifunctional portable information terminal 94 displays the next diagnosis flow screen (step S4) and returns the process to step S2 to continue the monitoring of existence/non-existence of the screen switching operation.

On the other hand, if it is determined that all of the diagnosis screens have been displayed (YES in step S3), the multifunctional portable information terminal 94 ends the diagnosis flow process at this time. Note that the screen switching button 95f may display "end" as a caption when no other diagnosis flow screen exists. Additionally, if the end button is taped, the multifunctional portable information terminal 94 may switches the diagnosis flow screen to an initial screen (not illustrated in the figure) of the multifunctional portable information terminal 94.

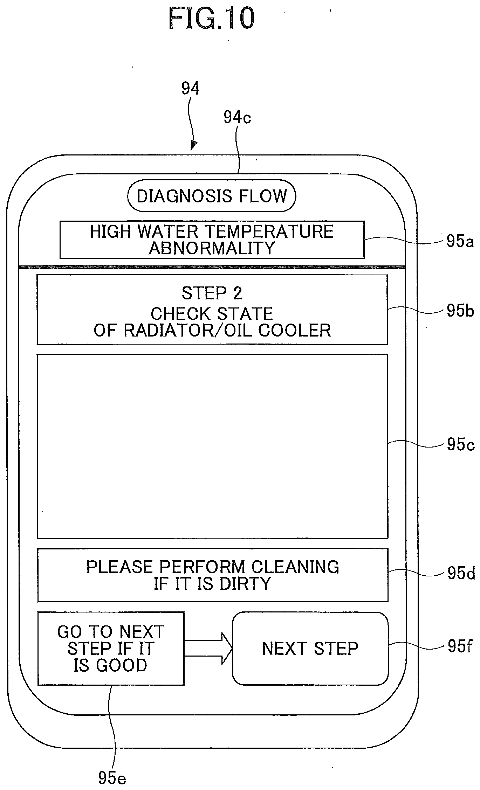

FIG. 10 is an illustration of a diagnosis flow screen displayed when the screen switching button 95f of FIG. 9 is tapped. In the diagnosis flow screen of FIG. 10, "step 2" indicating that the display is a second check item regarding the abnormality contents "high water temperature abnormality" is displayed in the check item number displaying part 95b. Additionally, it displays that the contents of step 2 is "checking a state of radiator and oil cooler". The check item position displaying part 95c displays an illustration indicating the radiator and oil cooler on an illustration representing an image of the entire shovel in a color different from other parts (illustration is omitted in FIG. 10).

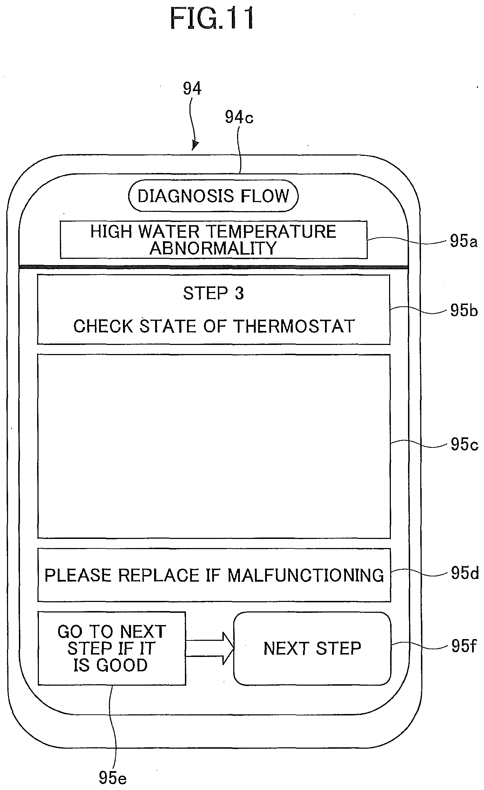

FIG. 11 is an illustration of a diagnosis flow screen displayed when the screen switching button 95f of FIG. 10 is tapped. In the diagnosis flow screen of FIG. 11, "step 3" indicating the third check item with respect to the abnormality contents "high water temperature abnormality" is displayed in the check item number displaying part 95b. Additionally, the check item number display part 95b displays that the contents of the step 3 is "check a state of the thermostat". The check item position displaying part 95c displays an illustration indicating the thermostat on an illustration indicating an image of the entire shovel in a color different from other parts (illustration is omitted in FIG. 11). The first message displaying part 95d displays "replacement in a case of operation failure (please replace when malfunctioning)" as measures to be taken by a maintenance worker with respect to the thermostat.

As mentioned above, the multifunctional portable information terminal 94 can present measures to be taken with respect the present abnormality contents to the operator of the multifunctional portable information terminal 94 in an easily understandable manner.

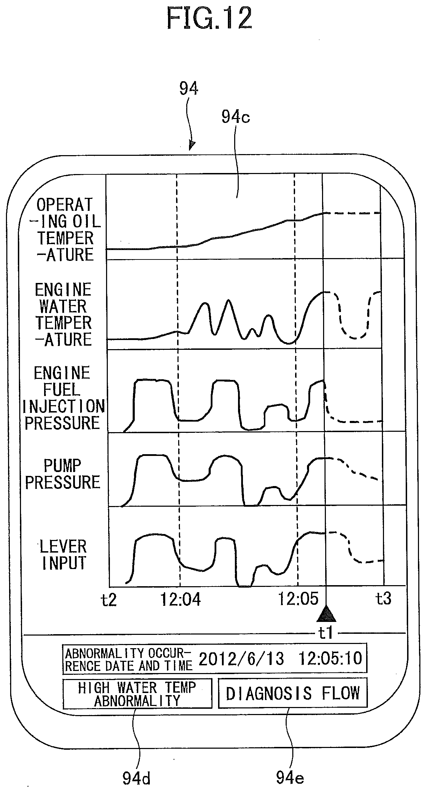

Next, a description is given, with reference to FIG. 12, of a case where the operator of the multifunctional portable information terminal 94 can assume a cause of the abnormality contents of the shovel without performing the diagnosis flow process. FIG. 12 is an illustration illustrating the display part 94c of the multifunctional portable information terminal 94 on which the abnormality information is displayed, which corresponds to FIG. 6. In the example illustrated in FIG. 12, the engine water temperature starts to vibrate vertically us and down at a time passed the time 12:04, which is an unstable state of the engine water temperature. It is assumed that this is caused by a looseness in the attachment of the thermostat. Thus, the operator (maintenance worker) of the multifunctional portable information terminal 94 first thinks about a malfunction of the thermostat and performs a maintenance work (repair or the like).

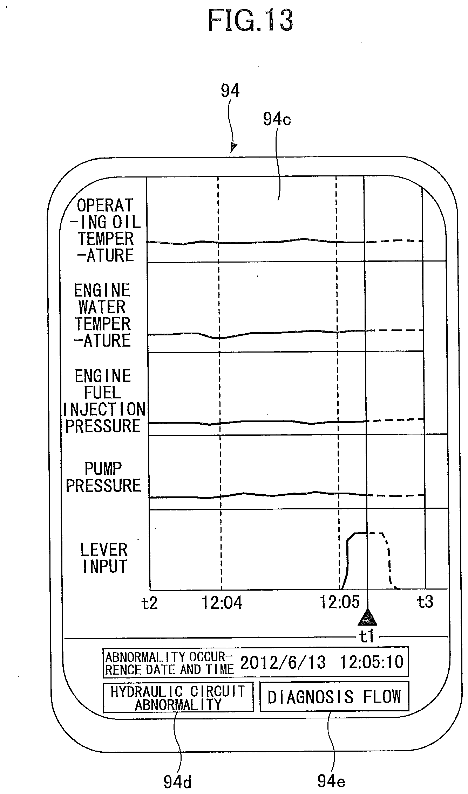

Similarly, FIG. 13 is an illustration of the display part 94c of the multifunctional portable information terminal 94 on which the abnormality information is displayed, and is a display example when an abnormality different from the example illustrated in FIG. 6 occurs. In the example illustrated in FIG. 13, there are no changes in the pump pressure, engine fuel injection pressure, engine water temperature and operating oil temperature despite that the lever input rises slightly before time t1. As one of causes that lead to such a condition, it is considered that an abnormality occurs in the main pump 14. For example, if the main pump 14 cannot generate a hydraulic pressure because it is driven but runs idle, the pump pressure does not rise and a load to the engine does not rise, and, thereby, the engine fuel injection pressure and engine water pressure do not rise. Additionally, because the hydraulic pressure does not rise, the operating oil temperature also does not rise. The abnormality information illustrated in FIG. 13 represents such a condition (a condition in which the abnormality contents indicates "hydraulic circuit abnormality"). When a maintenance worker sees the display illustrated in FIG. 13, the maintenance worker can perform a maintenance work (repair, etc.) first in consideration of a malfunction of the main pump 14.

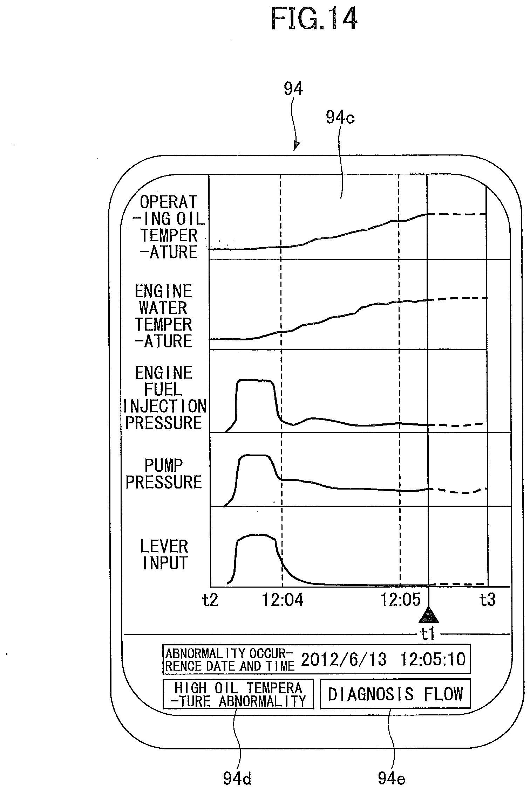

Similarly, FIG. 14 is an illustration of the display part 94c of the multifunctional portable information terminal 94 on which the abnormality information is displayed, and is a display example when an abnormality different from the examples illustrated in FIGS. 6 and 13 occurs. In the example illustrated in FIG. 14, despite that the lever input is lost after it once rises immediately after time t2, the pump pressure, which is to be lost, is not lost and an absorbing horsepower by the main pump 14 is maintained higher than or equal to a predetermined value. As one of causes that lead to such a condition, it is considered that an abnormality occurs in a negative control (hereinafter, may be referred to as the "negacon"), which is an energy saving circuit. For example, if the main pump 14 malfunctions, the operating oil temperature and engine water temperature continuously rise because the main pump 14 continuously discharges the operating oil at a high flow rate. The abnormality information illustrated in FIG. 14 represents such a condition (a condition in which the abnormality contents indicates "high oil temperature abnormality"). When a maintenance worker sees the display illustrated in FIG. 14, the maintenance worker can perform a maintenance work (repair, etc.) first in consideration of a malfunction of the "negacon" (negative controller).

Note that although the pilot pressure supplied by a lever operation is used as the operation input amount in the above-mentioned embodiment, if the operation lever is of an electric type, an electric signal indicating the lever operation amount output from the operation device can be used as the operation input amount. Additionally, for example, detection values of a pump discharge amount of the main pump (or a proportional valve current), an engine revolution number sent from the ECU 74, an engine load rate, an engine boost pressure, etc., may be used as physical amounts other than the detection values illustrated in FIG. 6.

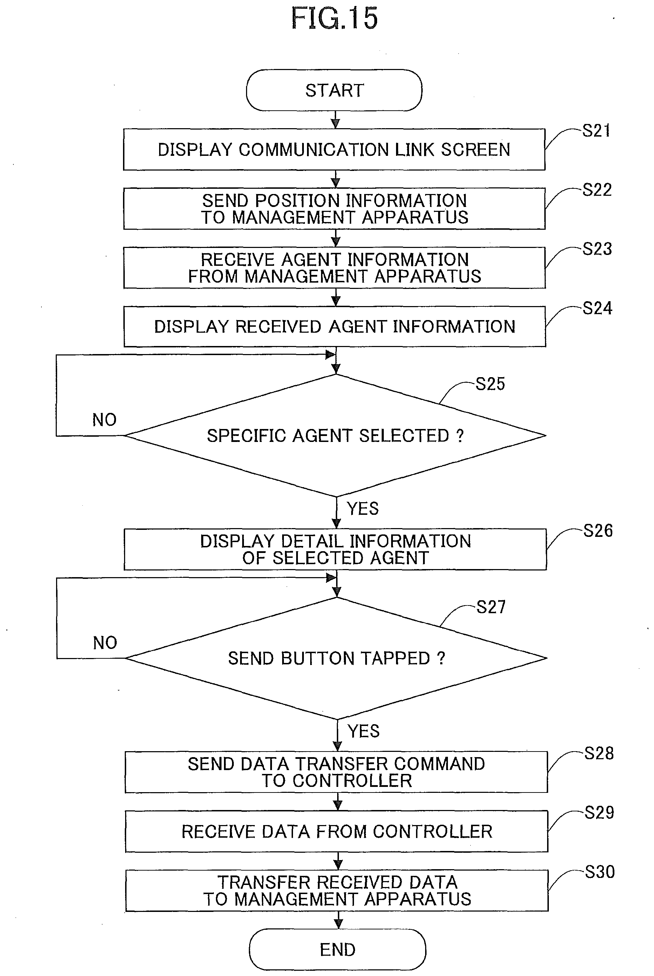

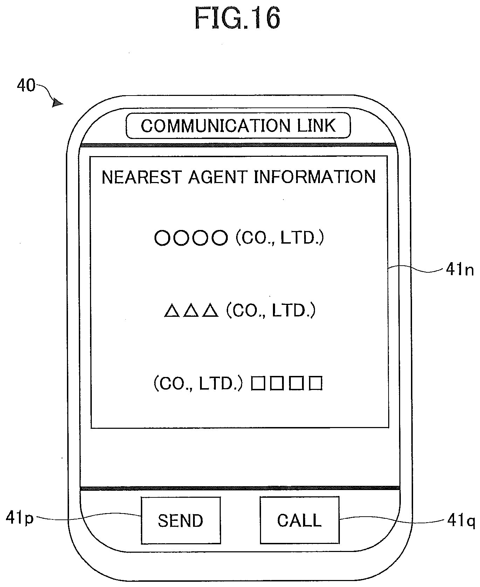

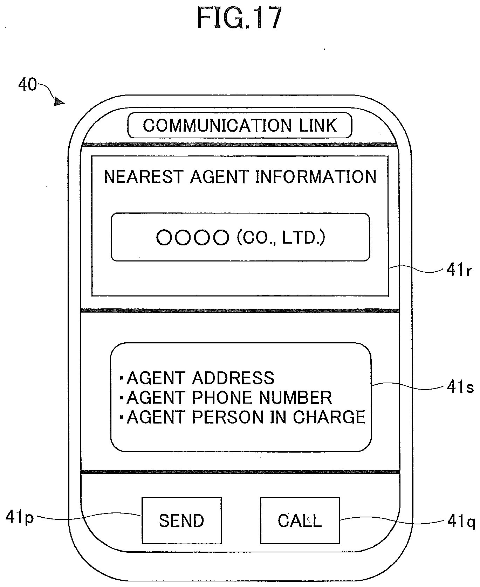

Next, a description is given, with reference to FIG. 15 through FIG. 17, of a process performed in the multifunctional portable information terminal 40 (hereinafter, referred to as the "shovel abnormal time process") when an abnormality of the shovel is detected. FIG. 15 is a flowchart indicating a flow of the shovel abnormality time process. FIG. 16 and FIG. 17 are examples of a screen that displays various kinds of information acquired through a communication with the management apparatus 90 (hereinafter, referred to as the "communication link screen"). Additionally, the multifunctional portable information terminal 40 performs the shovel abnormal time process when an abnormality of the shovel is detected based on a notification from the controller 30.

First, the multifunctional portable information terminal 40 displays the communication link screen (step S21). The communication link screen includes, as illustrated in FIG. 13, an agent information display part 41n, send button 41p and call button 41q. The agent information display part 41n is an area for displaying information regarding a contact address at the time of abnormality in the shovel. The send button 41p and call button 41q are software buttons displayed on the display and input device 40c. When the send button 41p is tapped, the multifunctional portable information terminal 40 sends the data stored in a predetermined area in the controller 30. When the call button 41q is tapped, the multifunctional portable information terminal 40 makes a call to the contact address, which is in a selected state on the display and input device 40c.

Thereafter, the multifunctional portable information terminal 40 sends position information of its own to the management apparatus 90 (step S22). The multifunctional portable information terminal 40 sends position information acquired using the GPS function to the management apparatus 90. The management apparatus 90 creates agent information by searching information regarding an agent existing within a predetermined distance range from the present position of the multifunctional portable information terminal 40 based on the position information received from the multifunctional portable information terminal 40. Then, the management apparatus 90 sends the created agent information to the multifunctional portable information terminal 40.

Thereafter, the multifunctional portable information terminal 40 receives the agent information from the management apparatus 90 (step S23), and displays the received agent information on the agent information display part 41n of the communication link screen (step S24). FIG. 16 illustrates a state where three agents are retrieved as a nearest agent.

Thereafter, the multifunctional portable information terminal 40 determines whether a specific agent is selected (step S25). The multifunctional portable information terminal 40 determines whether any one of the areas corresponding to the respective three agents in the agent information display part 41n is tapped by the driver.

If it is determined that a specific agent is not selected yet (NO in step S25), the multifunction portable information terminal 40 waits until a specific agent is selected.

If it is determined that a specific agent is selected (YES in step S25), the multifunction portable information terminal 40 displays the selected agent and detail information of the selected agent on the display and input device 40c (step S26). The multifunction portable information terminal 40 displays the communication link screen containing a selected agent display part 41r, which displays the selected specific agent, and a detail information display part 41r, which displays information of details of the selected specific agent. FIG. 17 illustrates a state where a specific agent is selected and information of details of the selected agent is displayed.

Thereafter, the multifunction portable information terminal 40 determines whether the sending button 41p is tapped (step S27).

Then, if it is determined that the send button 41p is not tapped (NO in step S27), the multifunction portable information terminal 40 waits until the send button 41p is tapped.

On the other hand, if it is determined that the send button 41p is tapped (YES in step S27), the multifunction portable information terminal 40 sends a data transfer command to the controller 30 (step S28). Upon reception of the data transfer command, the controller 30 sends data, which is stored in a predetermined area such as the temporary storing part 30a, the abnormality information storing part, etc., to the multifunction portable information terminal 40.

Thereafter, the multifunction portable information terminal 40 receives the data sent from the controller 30 (step S29), and transfers the received data to the management apparatus 90 (step S30).

If the call button 41q is tapped, the multifunction portable information terminal 40 dials the telephone number of the agent that is set in a selected state.

As mentioned above, the multifunction portable information terminal 40 automatically displays the communication link screen when an abnormality is detected in the shovel so that the driver can easily take measures such as a contact to the agent.

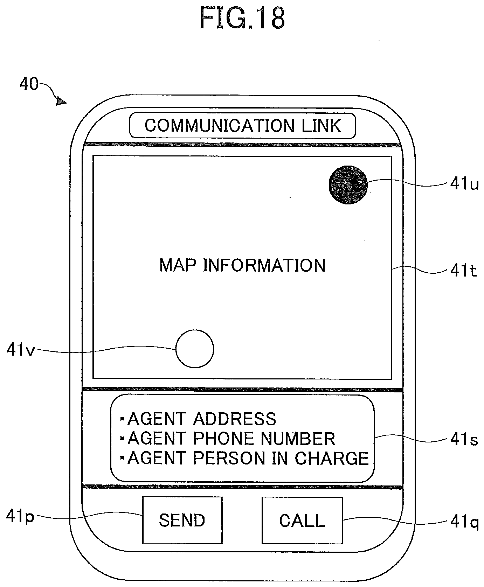

Next, a description is given, with reference to FIG. 18, of another example of the communication link screen displayed on the display and input device 41c when performing the shovel abnormality time process. The communication link screen illustrated in FIG. 15 includes the send button 41p, call button 41q, detail information display part 41s and a map display part 41t.

The multifunction portable information terminal 40 receives agent information from the management apparatus 90, and displays the communication link screen on the display and input device 40c after a specific agent is selected. Note that the multifunction portable information terminal 40 may display the communication link screen before a specific agent is selected.

The map display part 41t is a part for displaying map information, and includes a present position icon 41u, which indicates a present position of the shovel (the multifunction portable information terminal 40), and an agent position icon 41v, which indicates a position of the retrieved or selected agent.

The driver can perform scrolling, reducing and enlarging of map information on the map display part 41t using a swipe operation, pinch-in operation, pinch-out operation, etc., on the multifunction portable information terminal 40.

As mentioned above, the multifunction portable information terminal 40 displays the map information when an abnormality is detected in the shovel so that the driver can easily recognize a positional relationship between the shovel and the agent. Additionally, the multifunction portable information terminal 40 makes an exclusive communication controller, which is to be attached to the shovel, unnecessary so as to attempt a cost reduction of the shovel. Moreover, the vibration measuring function provided in the multifunction portable information terminal 40 can be used in a failure analysis of components constituting the shovel. Furthermore, the orientation determining function provided in the multifunction portable information terminal 40 can be used when displaying an orientation of the shovel on the map display part 41t.

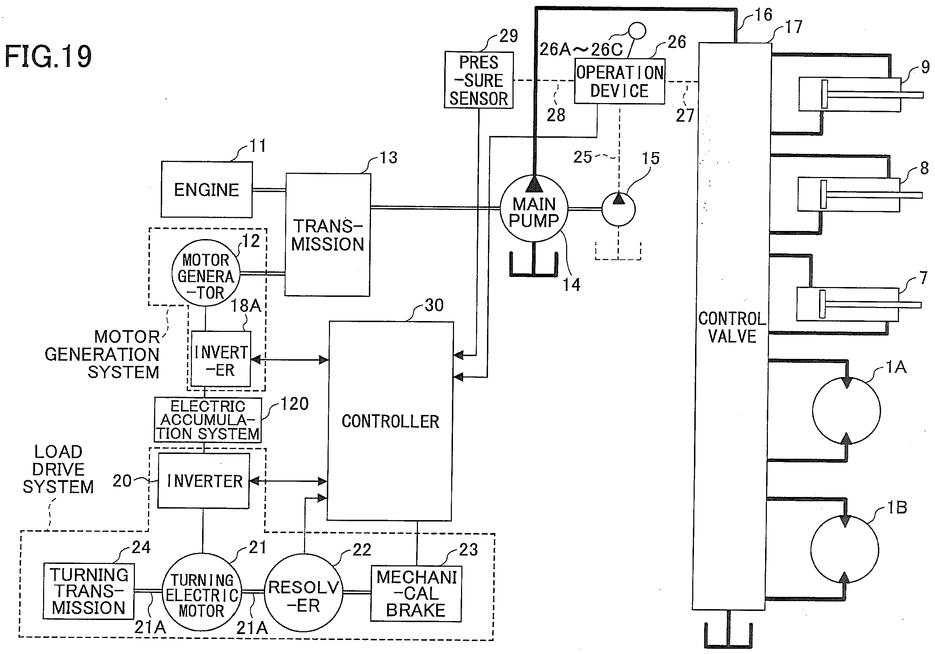

Although the management apparatus is mounted to the shovel in the above-mentioned embodiments, the management apparatus may be mounted to a hybrid shovel having a structure illustrated in FIG. 19. A description is given below of a structure of a hybrid shovel. In FIG. 19, double lines denote a mechanical power system, bold solid lines denote high-pressure hydraulic lines, dashed thin lines denote pilot lines, and thin solid lines denotes an electric drive/control system.

An engine 11 as a mechanical drive part and a motor generator 12 as an assist drive part are connected to two input axes of a transmission 13, respectively. A main pump 14 and pilot pump 15 as hydraulic pumps are connected to an output axis of the transmission 13. A control valve 17 is connected to the main pump 14 via a high-pressure hydraulic line 16.

The control valve 17 is a control device for controlling the hydraulic system in the hybrid shovel. Hydraulic motors 1A (right) and 1B (left) for the lower running body 1, a boom cylinder 7, an arm cylinder 8 and a bucket cylinder 9 are connected to the control valve 17 via the high-pressure hydraulic lines.

An electric accumulation system 120 including a capacitor as an electric accumulator is connected to the motor generator via an inverter 18A. A turning electric motor 21 as an electric operating element is connected to the electric accumulation system via an inverter 20. A resolver 22, mechanical brake 23 and turning transmission 24 are connected to a rotation axis 21A of a turning electric motor 21. An operation device 26 is connected to the pilot pump 15 via a pilot line 25. The turning electric motor 21, inverter 20, resolver 22, mechanical brake 23 and turning transmission 24 together constitute a load drive system.

The operation device 26 includes a lever 26A, lever 26B and pedal 26C. The lever 26A, lever 26B and pedal 26C are connected to the control valve 17 and the pressure sensor 29 via hydraulic lines 27 and 28, respectively. The pressure sensor 29 is connected to the controller 30, which performs a drive control for an electric system.

The controller 30 is a control device as a main control part for performing a drive control for the hybrid shovel. The controller 30 is constituted by an operation processing device including a CPU (Central Processing Unit) and an internal memory, and is a device materialized by the CPU executing a drive control program stored in the internal memory.

The controller 30 converts a signal supplied from the pressure sensor 29 into a speed command to perform the drive control on the turning electric motor 21. The signal supplied from the pressure sensor 29 corresponds to a signal representing an amount of operation when the operation device 26 is operated to turn a turning mechanism 2.

The controller 30 performs a drive control of the motor generator 12 (switching between an electric drive (assist) operation and a generating operation), and also performs a charge and discharge control of the capacitor as an electric accumulation part of the electric accumulation system 120 by drive-controlling a voltage up and down converter of the electric accumulation system 120. The controller 30 performs a switching control between an voltage-up operation and a voltage-down operation of the voltage up and down converter based on a charge state of the capacitor, a drive state of the motor generator 12 (an electric drive (assist) operation or a generating operation) and a drive state of the turning electric motor 21 (a power running operation or a regenerative operation), and, thereby, performing a charge and discharge control of the capacitor.

## Claims

1. A shovel management system, comprising:
a controller (30) for a shovel, adapted to control an operation of the shovel, the controller (30) including a control part (30b) configured to determine occurrence of an abnormality and an abnormality information storing part (30c) that stores abnormality information; and
a transmission part adapted to wirelessly transmit the abnormality information stored in the abnormality information storing part (30c) to a center management apparatus (90) installed in a remote service center under the control of the control part (30b);
the system being **characterized by** additionally comprising
a portable information terminal (40, 94) adapted to receive, through a communication network, the transmitted abnormality information from the center management apparatus (90) and display the received abnormality information,
wherein the portable information terminal (40, 94) includes diagnosis application software,
wherein the portable information terminal (40, 94) is further adapted to activate the diagnosis application software and to perform a diagnosis flow process for a specific abnormality content each time a diagnosis flow button (94e) is tapped, wherein the diagnosis flow process includes that the portable information terminal (40, 94) refers to a reference table in which, for each abnormality content, check items being components of the shovel are stored in a predetermined order and displays information regarding the check items corresponding to the specific abnormality content in the stored order,
wherein the portable information terminal (40, 94) is adapted to display, after activation of the diagnosis application software, a plurality of diagnosis flow screens iteratively, each diagnosis flow screen simultaneously displaying an abnormality contents displaying part (95a), a check item number displaying part (95b), a check item position displaying part (95c), a first message displaying part (95d), a second message displaying part (95e), and a screen switching button (95f), the plurality of screens being switched in the predetermined order of the check items, when the screen switching button (95f) is tapped,
wherein the first message displaying part (95d) is an area for displaying a measure to be taken by a maintenance worker with respect to the check item being displayed in the check item position displaying part (95c), and
wherein the portable information terminal (40, 94) is adapted to display, in the check item position displaying part (95c), the position of the component of the shovel, which is one of the check items, after activation of the diagnosis application software.

2. The shovel management system as claimed in claim 1, wherein the portable information terminal (40, 94) is adapted to display, in the check item position display part (95c), an illustration indicating the check item on an illustration indicating an entire image of the shovel in a color different from other parts of the shovel.

3. The shovel management system as claimed in claim 1 or 2, wherein the portable information terminal (40, 94) is adapted to be operated by operations including a swipe operation, a pinch-in operation, and a pinch-out operation.

4. The shovel management system as claimed in any of claims 1 to 3, wherein the portable information terminal (40, 94) is adapted to display the received abnormality information as pieces of data regarding a plurality of physical amounts and being vertically arranged time charts having a horizontal axis representing time and also to display the diagnosis flow button (94e) for switching to a diagnosis flow screen corresponding to the received abnormality information.

5. The shovel management system as claimed in any of claims 1 to 4, wherein the portable information terminal (40) is adapted to display information on an agent existing within a predetermined distance range from a present position of the portable information terminal (40).

6. The shovel management system as claimed in claim 5, wherein the portable information terminal (40) is adapted to display the information on the agent on a map.

## Patentansprüche

1. Baggermanagementsystem, welches Folgendes aufweist:
eine Steuervorrichtung (30) für einen Bagger, die ausgebildet ist, um einen Betrieb des Baggers zu steuern, wobei die Steuervorrichtung (30) einen Steuerteil (30b) aufweist, der konfiguriert ist, um das Auftreten eines abnormen Verhaltens bzw. einer Abnormalität zu bestimmen, und einen Abnormalitätsinformationsspeicherteil (30c), der Abnormalitätsinformation bzw. Information über abnormales Verhalten speichert; und
einen Übertragungsteil, der ausgebildet ist, um in drahtloser Weise die Abnormalitätsinformation, die in dem Abnormalitätsinformationsspeicherteil (30c) gespeichert ist, an eine zentrale Managementvorrichtung (90) zu übertragen, die in in einem entfernten Servicezentrum installiert ist, und zwar unter der Steuerung des Steuerteils (30b);
wobei das System **dadurch gekennzeichnet ist, dass** es zusätzlich Folgendes aufweist:
ein tragbares Informationsendgerät (40, 94), das ausgebildet ist, um durch ein Kommunikationsnetzwerk die übertragene Abnormalitätsinformation von der zentralen Managementvorrichtung (90) zu empfangen und die empfangene Abnormalitätsinformation anzuzeigen,
wobei das tragbare Informationsendgerät (40, 94) eine Diagnoseanwendungssoftware aufweist,
wobei das tragbare Informationsendgerät (40, 94) weiter ausgebildet ist, um die Diagnoseanwendungssoftware zu aktivieren und den Diagnoseflussprozess für einen spezifischen Abnormalitätsinhalt jedes Mal dann auszuführen, wenn ein Diagnoseflussknopf (94e) gedrückt wird, wobei der Diagnoseflussprozess aufweist, dass das tragbare Informationsendgerät (40, 94) auf eine Referenztabelle Bezug nimmt bzw. zugreift, in welcher für jeden Abnormalitätsinhalt Überprüfungsteile, welche Komponenten des Baggers sind, in einer vorbestimmten Reihenfolge gespeichert sind, und Information bezüglich der Überprüfungsteile entsprechend dem spezifischen Abnormalitätsinhalt in der gespeicherten Reihenfolge anzeigt,
wobei das tragbare Informationsendgerät (40, 94) ausgebildet ist, um nach der Aktivierung der Diagnoseanwendungssoftware eine Vielzahl von Diagnoseflussbildschirmdarstellungen in iterativer Weise anzuzeigen, wobei jede Diagnoseflussbildschirmdarstellung gleichzeitig einen Abnormalitätsinhaltsanzeigeteil (95a), einen Überprüfungsteilanzahlanzeigeteil (95b), einen Überprüfungsteilpositionsanzeigeteil (95c), einen ersten Nachrichtenanzeigeteil (95d), einen zweiten Nachrichtenanzeigeteil (95e) und einen Bildschirmdarstellungsumschaltknopf (95f) anzeigt, wobei die Vielzahl der Bildschirmdarstellungen in der vorbestimmten Reihenfolge der Überprüfungsteile umgeschaltet wird, wenn der Bildschirmdarstellungsumschaltknopf (95f) gedrückt wird,
wobei der erste Nachrichtenanzeigeteil (95d) ein Bereich zum Anzeigen einer Maßnahme ist, die durch einen Instandhaltungsarbeiter bezüglich des Überprüfungsteils ausgeführt werden soll, welches in dem Überprüfungsteilpositionsanzeigeteil (95c) angezeigt wird, und
wobei das tragbare Informationsendgerät (40, 94) ausgebildet ist, um in dem Überprüfungsteilpositionsanzeigeteil (95c) die Position der Komponente des Baggers, die eines der Überprüfungsteile ist, nach der Aktivierung der Diagnoseanwendungssoftware anzuzeigen.

2. Baggermanagementsystem nach Anspruch 1, wobei das tragbare Informationsendgerät (40, 94) ausgebildet ist, um in dem Überprüfungsteilpositionsanzeigeteil (95c) eine Darstellung anzuzeigen, welche das Überprüfungsteil auf einer Darstellung anzeigt, welche ein gesamtes Bild des Baggers anzeigt, und zwar in einer anderen Farbe als andere Teile des Baggers.

3. Baggermanagementsystem nach Anspruch 1 oder 2, wobei das tragbare Informationsendgerät (40, 94) ausgebildet ist, um durch Operationen betrieben zu werden, welche eine Swipe- bzw. Wischoperation, eine Pinch-in- bzw. Verkleinerungsoperation und eine Pinch-out- bzw. Vergrößerungsoperation aufweist.

4. Baggermanagementsystem nach einem der Ansprüche 1 bis 3, wobei das tragbare Informationsendgerät (40, 94) ausgebildet ist, um die empfangene Abnormalitätsinformation als Datenteile bezüglich einer Vielzahl von physischen Mengen anzuzeigen, und wobei dies vertikal angeordnete Zeitdiagramme sind, die eine horizontale Achse haben, welche die Zeit darstellt, und auch um den Diagnoseflussknopf (94e) zum Umschalten auf eine Diagnoseflussbildschirmdarstellung entsprechend der empfangenen Abnormalitätsinformation umzuschalten.

5. Baggermanagementsystem nach einem der Ansprüche 1 bis 4, wobei das tragbare Informationsendgerät (40) ausgebildet ist, um Information zu einem Agenten bzw. Händler anzuzeigen, der innerhalb eines vorbestimmten Entfernungsbereiches von einer vorbestimmten Position des tragbaren Informationsendgerätes (/40) vorhanden ist.

6. Baggermanagementsystem nach Anspruch 5, wobei das tragbare Informationsendgerät (40) ausgebildet ist, um die Information zu dem Agenten bzw. Händler auf einer Karte anzuzeigen.

## Revendications

1. Système de gestion de pelle, comprenant :
un contrôleur (30) d'une pelle, adapté pour commander une opération de la pelle, le contrôleur (30) comportant une partie de commande (30b) configurée pour déterminer l'apparition d'une anomalie et une partie de stockage d'informations d'anomalie (30c) qui stocke des informations d'anomalie ; et
une partie de transmission adapté pour transmettre sans fil les informations d'anomalie stockées dans la partie de stockage d'informations d'anomalie (30c) à un appareil de gestion central (90) installé dans un centre de service à distance sous la commande de la partie de commande (30b) ;
le système étant **caractérisé en ce qu'**il comprend en outre
un terminal d'information portable (40, 94) adapté pour recevoir, au moyen d'un réseau de communication, les informations d'anomalie transmises en provenance de l'appareil de gestion central (90) et pour afficher les informations d'anomalie reçues,
dans lequel le terminal d'information portable (40, 94) comporte un logiciel d'application de diagnostic,
dans lequel le terminal d'information portable (40, 94) est en outre adapté pour activer le logiciel d'application de diagnostic et pour exécuter un processus de flux de diagnostic pour un contenu d'anomalie particulier à chaque fois qu'un bouton de flux de diagnostic (94e) est pressé, dans lequel le processus de flux de diagnostic comporte le fait que le terminal d'information portable (40, 94) se réfère à une table de référence dans laquelle, pour chaque contenu d'anomalie, des éléments de vérification qui sont des composants de la pelle sont stockés dans un ordre prédéterminé et affiche des informations concernant les éléments de de vérification correspondant au contenu d'anomalie particulier dans l'ordre stocké,
dans lequel le terminal d'information portable (40, 94) est adapté pour afficher, après l'activation du logiciel d'application de diagnostic, une pluralité d'écrans de flux de diagnostic itérativement, chaque écran de flux de diagnostic affichant simultanément une partie d'affichage du contenu d'anomalie (95a), une partie d'affichage du numéro d'élément de vérification (95b), une partie d'affichage de la position de l'élément de vérification (95c), une première partie d'affichage de message (95d), une deuxième partie d'affichage de message (95e), et un bouton d'activation d'écran (95f), la pluralité d'écrans étant activé dans l'ordre prédéterminé des éléments de vérification, lorsque le bouton d'activation d'écran (95f) est pressé,
dans lequel la première partie d'affichage de message (95d) est une zone destinée à afficher une mesure à prendre par un agent de maintenance concernant l'élément de vérification qui est en cours d'affichage dans la partie d'affichage de la position de l'élément de vérification (95c), et
dans lequel le terminal d'information portable (40, 94) est adapté pour afficher, dans la partie d'affichage de position d'élément de vérification (95c), la position du composant de la pelle, qui est un des éléments de vérification, après l'activation du logiciel d'application de diagnostic.

2. Système de gestion de pelle selon la revendication 1, dans lequel le terminal d'information portable (40, 94) est adapté pour afficher, dans la partie d'affichage de la position de l'élément de vérification (95c), une illustration indiquant l'élément de vérification sur une illustration indiquant une image entière de la pelle dans une couleur différente d'autres parties de la pelle.

3. Système de gestion de pelle selon la revendication 1 ou 2, dans lequel le terminal d'information portable (40, 94) est adapté pour être actionné par des opérations comportant une opération de glissement, une opération de zoom avant et une opération de zoom arière.

4. Système de gestion de pelle selon l'une quelconque des revendications 1 à 3, dans lequel le terminal d'information portable (40, 94) est adapté pour afficher les informations d'anomalie reçues sous forme de parties de données relatives à une pluralité de quantités physiques et qui sont des chronogrammes agencés verticalement ayant un axe horizontal représentant le temps et pour afficher également le bouton de flux de diagnostic (94e) pour passer à un écran de flux de diagnostic correspondant aux informations d'anomalie reçues.

5. Système de gestion de pelle selon l'une quelconque des revendications 1 à 4, dans lequel le terminal d'information portable (40) est adapté pour afficher des informations sur un agent existant dans une plage de distance prédéterminée à partir d'une position actuelle du terminal d'information portable (40).

6. Système de gestion de pelle selon la revendication 5, dans lequel le terminal d'information portable (40) est adapter pour afficher les informations sur l'agent se trouvant sur une carte
